# EUROPEAN PATENT APPLICATION

(11) **EP 4 593 162 A1**
(43) Date of publication of application: **30.07.2025**
(21) Application number: 23878684.2
(22) Date of filing: 27.06.2023
(51) Int. Cl.: H01M 10/6568, H01M 10/617, B60H 1/03, B60K 11/02

(54) **ENERGY STORAGE SYSTEM AND POWER SUPPLY SYSTEM**

(30) Priority: 21.10.2022 CN 202211293758
(71) Applicant: Huawei Digital Power Technologies Co., Ltd., Shenzhen, Guangdong 518043 (CN)
(72) Inventor: MENG, Hao, Shenzhen, Guangdong 518043 (CN); XU, Chunxia, Shenzhen, Guangdong 518043 (CN)
(74) Representative: Epping - Hermann - Fischer
(86) International application number: PCT/CN2023/102933
(87) International publication number: WO 2024/082687

(57) **Abstract**

This application provides an energy storage system and a power supply system. The energy storage system includes a battery pack, a power conversion component, a first liquid runner, a second liquid runner, a first drive apparatus, a second drive apparatus, and a liquid dispenser. The first liquid runner is in contact with the battery pack in a thermally conductive manner, and the first drive apparatus communicates with the first liquid runner. The second liquid runner is in contact with the power conversion component in a thermally conductive manner, and the second drive apparatus communicates with the second liquid runner. The liquid dispenser separately communicates with the first liquid runner and the second liquid runner. When the liquid dispenser is in a first working state, the first liquid runner is isolated from the second liquid runner. Control may be separately performed according to temperature requirements of the battery pack and the power conversion component. When the liquid dispenser is in a second working state, the first liquid runner communicates with the second liquid runner, to form one whole loop. In this way, the battery pack is heated by using heat generated by the power conversion component. A temperature control solution can be adjusted based on a working state, to reduce space occupied by the energy storage system and reduce power consumption.

## Description

### CROSS-REFERENCE TO RELATED APPLICATIONS

This application claims priority to Chinese Patent Application No. 202211293758.X, filed with the China National Intellectual Property Administration on October 21, 2022 and entitled "ENERGY STORAGE SYSTEM AND POWER SUPPLY SYSTEM", which is incorporated herein by reference in its entirety.

### TECHNICAL FIELD

This application relates to the field of power supply device technologies, and in particular, to an energy storage system and a power supply system.

### BACKGROUND

In the context of rapid global development of new energy technologies, various technologies related to energy storage are widely applied. Specifically, a manner of using a container for energy storage is also widely applied. In addition, the container may be an energy storage system, and one power supply system may include a plurality of energy storage systems.

The energy storage system may specifically include a battery pack and a power conversion component. In a working process of the energy storage system, both the battery pack and the power conversion component generate heat. Therefore, the energy storage system further includes a temperature control system. The temperature control system is used to control temperatures of the battery pack and the power conversion component, so that the battery pack and the power conversion component each work in an appropriate temperature environment. In conventional technologies, two mutually independent temperature control systems are used to respectively control the temperatures of the battery pack and the power conversion component. The temperature control systems of the entire energy storage system are large in size, which is unconducive to energy saving.

### SUMMARY

This application provides an energy storage system and a power supply system. The energy storage system may adjust a temperature control solution based on a working state, to reduce space occupied by the energy storage system, reduce power consumption, and save energy.

According to a first aspect, this application provides an energy storage system. The energy storage system includes a battery pack, a power conversion component, a first liquid runner, a second liquid runner, a first drive apparatus, a second drive apparatus, and a liquid dispenser. The first liquid runner is in contact with the battery pack in a thermally conductive manner, and the first drive apparatus communicates with the first liquid runner and is configured to drive a liquid working substance to flow in the first liquid runner, thereby controlling a temperature of the battery pack. The second liquid runner is in contact with the power conversion component in a thermally conductive manner, and the second drive apparatus communicates with the second liquid runner and is configured to drive the liquid working substance to flow in the second liquid runner, thereby controlling a temperature of the power conversion component. The liquid dispenser separately communicates with the first liquid runner and the second liquid runner. The liquid dispenser has a first working state and a second working state. When the liquid dispenser is in the first working state, the first liquid runner is isolated from the second liquid runner, to form two mutually independent loops. In this case, the temperature of the battery pack may be controlled by using the first liquid runner, and the temperature of the power conversion component may be controlled by using the second liquid runner. Control may be separately performed according to temperature requirements of the battery pack and the power conversion component. This helps improve temperature control effect and reduce energy consumption. When the liquid dispenser is in the second working state, the first liquid runner communicates with the second liquid runner, to form one whole loop. In this case, the battery pack may be heated by using heat of the power conversion component. This helps save energy. In addition, a temperature of the liquid cooling working substance may be lowered by using two heat exchangers, to improve heat dissipation efficiency of the battery pack.

In a specific technical solution, the liquid dispenser includes a first pipe joint, a second pipe joint, a third pipe j oint, and a fourth pipe j oint. The first pipe j oint and the second pipe joint are provided on the first liquid runner. When the first pipe joint communicates with the second pipe joint, the first liquid runner forms a loop. The third pipe joint and the fourth pipe joint are provided on the second liquid runner. When the third pipe joint communicates with the fourth pipe joint, the second liquid runner forms a loop. When the liquid dispenser is in the first working state, the first pipe joint communicates with the second pipe joint, and the third pipe joint communicates with the fourth pipe joint, so that the first liquid runner and the second liquid runner form the mutually independent loops. When the liquid dispenser is in the second working state, the first pipe joint communicates with the third pipe joint, and the second pipe joint communicates with the fourth pipe joint, so that the first liquid runner and the second liquid runner communicate to form the whole loop.

The liquid dispenser may be specifically a four-way valve, and four valve holes of the four-way valve are the first pipe joint, the second pipe joint, the third pipe joint, and the fourth pipe joint, respectively. In this solution, the liquid dispenser is small in size, which helps reduce space occupied by the energy storage system.

In another technical solution, the liquid dispenser may alternatively be a first valve group. The first valve group includes a first single valve, a second single valve, a third single valve, and a fourth single valve. The first single valve is connected between the first pipe joint and the second pipe joint. The second single valve is connected between the second pipe joint and the third pipe joint. The third single valve is connected between the third pipe joint and the fourth pipe joint. The fourth single valve is connected between the fourth pipe joint and the first pipe joint. When the liquid dispenser is in the first working state, the first single valve and the third single valve are opened, and the second single valve and the fourth single valve are closed, so that the first liquid runner and the second liquid runner are independent of each other and work separately. When the liquid dispenser is in the second working state, the second single valve and the fourth single valve are opened, and the first single valve and the third single valve are closed, so that the first liquid runner and the second liquid runner communicate with each other.

In still another technical solution, the liquid dispenser may alternatively be a liquid storage tank, and the first pipe joint, the second pipe joint, the third pipe joint, and the fourth pipe joint communicate with a cavity of the liquid storage tank. The liquid storage tank includes a separator. When the liquid dispenser is in the first working state, the separator divides the liquid storage tank into a first liquid storage cavity and a second liquid storage cavity, the first pipe joint and the second pipe joint communicate with the first liquid storage cavity, and the third pipe joint and the fourth pipe joint communicate with the second liquid storage cavity. When the liquid dispenser is in the second working state, the separator combines the first liquid storage cavity and the second liquid storage cavity into a communicated cavity.

In a technical solution, the first drive apparatus further includes a first heat exchanger, and the second drive apparatus further includes a second heat exchanger. The liquid dispenser includes a fifth pipe joint, a sixth pipe joint, a seventh pipe joint, an eighth pipe joint, a ninth pipe joint, a tenth pipe joint, an eleventh pipe joint, and a twelfth pipe joint. The fifth pipe joint and the sixth pipe joint are provided on the first liquid runner, the seventh pipe joint and the eighth pipe joint are provided on the second liquid runner, the first heat exchanger is connected between the ninth pipe j oint and the tenth pipe j oint, and the second heat exchanger is connected between the eleventh pipe joint and the twelfth pipe joint. When the liquid dispenser is in the first working state, the fifth pipe joint communicates with the ninth pipe joint, the sixth pipe joint communicates with the tenth pipe joint, the seventh pipe joint communicates with the eleventh pipe joint, and the eighth pipe joint communicates with the twelfth pipe joint. In this case, the first liquid runner and the second liquid runner are two independent loops. When the liquid dispenser is in the second working state, the fifth pipe joint communicates with the seventh pipe joint, the sixth pipe joint communicates with the eighth pipe joint, and the ninth pipe joint, the tenth pipe joint, the eleventh pipe joint, and the twelfth pipe joint are closed. In this case, the first liquid runner and the second liquid runner communicate to form one loop.

In a further technical solution, the liquid dispenser may further include a third working state. When the liquid dispenser is in the third working state, the fifth pipe joint communicates with the sixth pipe joint, the seventh pipe joint sequentially communicates with the tenth pipe joint and the eleventh pipe joint, and the eighth pipe joint communicates with the ninth pipe j oint and the twelfth pipe joint.

In still another technical solution, the liquid dispenser may further include a fourth working state. When the liquid dispenser is in the fourth working state, the fifth pipe joint communicates with the ninth pipe joint and the twelfth pipe j oint, the sixth pipe joint communicates with the tenth pipe joint and the eleventh pipe joint, and the seventh pipe joint communicates with the eighth pipe joint.

The liquid dispenser may be specifically a second valve group. The second valve group includes a fifth single valve, a sixth single valve, a seventh single valve, an eighth single valve, a ninth single valve, a tenth single valve, an eleventh single valve, and a twelfth single valve. The fifth single valve communicates with the fifth pipe joint. The sixth single valve communicates with the sixth pipe joint. The seventh single valve communicates with the seventh pipe joint. The eighth single valve communicates with the eighth pipe joint. The ninth single valve communicates with the ninth pipe joint. The tenth single valve communicates with the tenth pipe joint. The eleventh single valve communicates with the eleventh pipe joint. The twelfth single valve communicates with the twelfth pipe joint.

In another technical solution, the energy storage system further includes a heater. The heater communicates with a first cooling runner, and is configured to heat the liquid working substance in the first cooling runner. In this solution, the heater may heat the liquid working substance when the energy storage system is started in a cold environment, to adjust the temperature of the battery pack. In this case, the liquid dispenser may be enabled to be in the second working state, and the heater and the power conversion component both heat the liquid working substance. In this way, the temperature of the battery pack is quickly increased to an appropriate temperature, and the energy storage system quickly enters a good working state, thereby further reducing power consumption.

The energy storage system may further include a condenser. The condenser communicates with the first cooling runner, and is configured to lower the temperature of the liquid working substance in the first cooling runner. In this solution, the temperature of the liquid working substance may be lowered by using an external coolant. This improves a heat dissipation capability of the first liquid runner, and improves heat dissipation effect on the battery pack.

According to a second aspect, this application further provides a power supply system, and the energy storage system includes a power distribution device and at least one energy storage system provided in the first aspect. The power distribution device is electrically connected to the energy storage system. The power distribution device is further electrically connected to a user, and is configured to process electricity in the energy storage system and then distribute the processed electricity to the user for use. In this technical solution, the energy storage system in the power supply system may adjust a temperature control solution based on a working state, to reduce space occupied by the energy storage system, reduce power consumption, and save energy.

### BRIEF DESCRIPTION OF DRAWINGS

FIG. 1 is a diagram of a structure of an energy storage system in the conventional technology;
FIG. 2a is a diagram of a structure of an energy storage system in a working state according to an embodiment of this application;
FIG. 2b is a diagram of a structure of an energy storage system in another working state according to an embodiment of this application;
FIG. 3a is a diagram of a structure of a liquid dispenser in a working state according to an embodiment of this application;
FIG. 3b is a diagram of a structure of a liquid dispenser in another working state according to an embodiment of this application;
FIG. 4a is a diagram of a structure of a liquid dispenser in a working state according to an embodiment of this application;
FIG. 4b is a diagram of a structure of a liquid dispenser in another working state according to an embodiment of this application;
FIG. 5a is a diagram of a structure of an energy storage system in another working state according to an embodiment of this application;
FIG. 5b is a diagram of a structure of an energy storage system in another working state according to an embodiment of this application;
FIG. 5c is a diagram of a structure of an energy storage system in another working state according to an embodiment of this application; and
FIG. 5d is a diagram of a structure of an energy storage system in another working state according to an embodiment of this application.

Reference numerals:
1: battery pack; 2: power conversion component;
3: first liquid runner; 4: second liquid runner;
5: first drive apparatus; 6: second drive apparatus;
7: liquid dispenser; 71: first pipe joint;
72: second pipe joint; 73: third pipe joint;
74: fourth pipe joint; 75: fifth pipe joint;
76: sixth pipe joint; 77: seventh pipe joint;
78: eighth pipe joint; 79: ninth pipe joint;
710: tenth pipe joint; 711: eleventh pipe joint;
712: twelfth pipe joint; 8: first liquid storage tank;
9: first heat exchanger; 10: second liquid storage tank;
11: second heat exchanger; 12: heater;
13: liquid storage tank; 131: separator;
132: first liquid storage cavity; 133: second liquid storage cavity;
14: first valve group; 141: first single valve;
142: second single valve; 143: third single valve;
144: fourth single valve; 15: second valve group;
151: fifth single valve; 152: sixth single valve;
153: seventh single valve; 154: eighth single valve;
155: ninth single valve; 156: tenth single valve;
157: eleventh single valve; 158: twelfth single valve;
16: condenser; 161: first runner;
162: second runner.

### DESCRIPTION OF EMBODIMENTS

To make the objectives, technical solutions, and advantages of this application clearer, the following further describes this application in detail with reference to the accompanying drawings. Terms used in the following embodiments are merely intended to describe specific embodiments, but are not intended to limit this application. The terms "one", "a", "the", "the foregoing", "this", and "the one" of singular forms used in this specification and the appended claims of this application are also intended to include plural forms such as "one or more", unless otherwise specified in the context clearly.

Reference to "an embodiment", "a specific embodiment", or the like described in this specification means that one or more embodiments of this application include a specific feature, structure, or characteristic described with reference to the embodiment. The terms "include", "comprise", "have", and their variants all mean "include but are not limited to", unless otherwise specifically emphasized in another manner.

To facilitate understanding of an energy storage system and a power supply system provided in embodiments of this application, the following first describes an application scenario of the energy storage system and the power supply system.

With rapid development of the power supply system, an application scope of the energy storage system is increasingly wide. The energy storage system is a highly integrated energy storage apparatus including a plurality of battery clusters. The battery cluster includes a battery pack and a power conversion component. The battery cluster is connected to an external device through few interfaces, and has features of high integration, a small footprint, and good scalability. The battery cluster is an important part in development of distributed energy, a smart grid, and an energy internet. When the energy storage system works, both the battery pack and the power conversion component generate heat. Heat dissipation for the battery pack and a conversion unit is an important part for ensuring normal working of the energy storage system. In addition, when the energy storage system is started in a low-temperature environment, the battery pack needs to be heated to improve discharge efficiency of the battery pack. Therefore, a temperature control system is needed to control a temperature of the energy storage system.

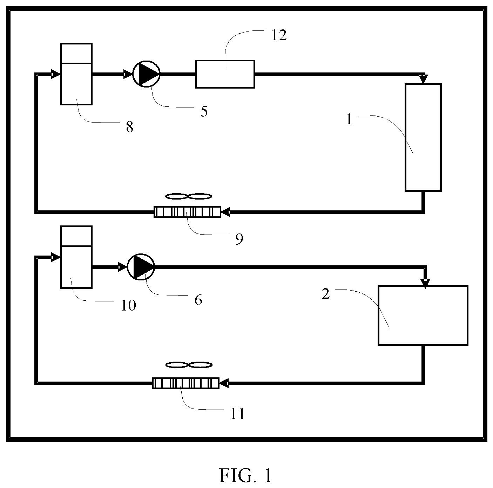

FIG. 1 is a diagram of a structure of an energy storage system in the conventional technology. As shown in FIG. 1, a temperature control system in the conventional technology includes two groups of independent temperature control loops. The two groups of independent temperature control loops are respectively in contact with a battery pack 1 and a power conversion component 2 in a thermally conductive manner. The temperature control loops may lower temperatures of the battery pack 1 and the power conversion component 2. In addition, when the energy storage system is started in a low-temperature environment, the temperature control loop may further increase a temperature of the battery pack 1. In this case, the temperature control loop in contact with the battery pack 1 in a thermally conductive manner may be connected to a heater 12. A structure of a temperature control system in this solution is large in size, and occupies large space.

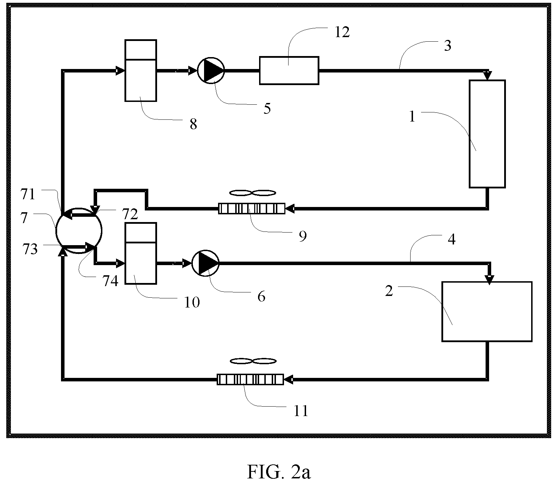

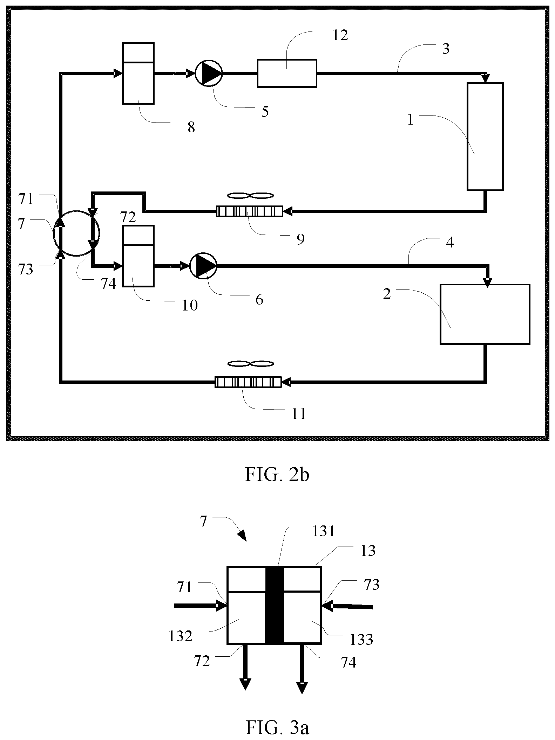

FIG. 2a is a diagram of a structure of an energy storage system in a working state according to an embodiment of this application. FIG. 2b is a diagram of a structure of an energy storage system in another working state according to an embodiment of this application. As shown in FIG. 2a and FIG. 2b, in a specific embodiment, the energy storage system includes a battery pack 1, a power conversion component 2, a first liquid runner 3, a second liquid runner 4, a first drive apparatus 5, a second drive apparatus 6, and a liquid dispenser 7. The first liquid runner 3, the second liquid runner 4, the first drive apparatus 5, the second drive apparatus 6, and the liquid dispenser 7 belong to a temperature control system that is used to control temperatures of the battery pack 1 and the power conversion component 2. Specifically, the first liquid runner 3 is in contact with the battery pack 1 in a thermally conductive manner, and the first drive apparatus 5 communicates with the first liquid runner 3 and is configured to drive a liquid working substance to flow in the first liquid runner 3, thereby controlling a temperature of the battery pack 1. The second liquid runner 4 is in contact with the power conversion component 2 in a thermally conductive manner, and the second drive apparatus 6 communicates with the second liquid runner 4 and is configured to drive the liquid working substance to flow in the second liquid runner 4, thereby controlling a temperature of the power conversion component 2. In other words, for temperature control of the battery pack 1 and temperature control of the power conversion component 2, this application provides two independent drive apparatuses that are respectively configured to drive the liquid working substance to control the temperature of the battery pack 1 and the temperature of the power conversion component 2. In addition, this application further provides a liquid dispenser 7. The liquid dispenser 7 separately communicates with the first liquid runner 3 and the second liquid runner 4. Specifically, the liquid dispenser 7 includes a first working state and a second working state. As shown in FIG. 2a, when the liquid dispenser 7 is in the first working state, the first liquid runner 3 is isolated from the second liquid runner 4. To be specific, the first drive apparatus 5 drives the liquid working substance to flow in the first liquid runner 3 but not flow in the second liquid runner 4, and the second drive apparatus 6 drives the liquid working substance to flow in the second liquid runner 4 but not flow in the first liquid runner 3. In this way, two mutually independent loops are formed. As shown in FIG. 2b, when the liquid dispenser 7 is in the second working state, the first liquid runner 3 communicates with the second liquid runner 4, and the liquid working substance may sequentially flow through the first liquid runner 3 and the second liquid runner 4. In this way, one whole loop is formed.

It should be noted that in this embodiment of this application, "contact in a thermally conductive manner" between A and B means that heat may be exchanged between A and B. Specifically, A and B may be directly in contact to exchange the heat, or A and B may be indirectly in contact through a thermally conductive structure such as a thermally conductive layer to exchange the heat, provided that A and B can exchange the heat.

In the embodiment shown in FIG. 2a and FIG. 2b, the temperature control system may further include a first liquid storage tank 8, a first heat exchanger 9, a second liquid storage tank 10, and a second heat exchanger 11. The first liquid storage tank 8 and the first heat exchanger 9 communicate with the first liquid runner 3. The first liquid storage tank 8 is configured to store the liquid working substance. The first heat exchanger 9 is configured to exchange heat for the liquid working substance, to lower a temperature of the liquid working substance. The first drive apparatus 5 drives the liquid working substance to flow in the first liquid storage tank 8, the first heat exchanger 9, and the first liquid runner 3. The second liquid storage tank 10 and the second heat exchanger 11 communicate with the second liquid runner 4. The second liquid storage tank 10 is configured to store the liquid working substance. The second heat exchanger 11 is configured to exchange heat for the liquid working substance, to lower the temperature of the liquid working substance. The second drive apparatus 6 drives the liquid working substance to flow in the second liquid storage tank 10, the second heat exchanger 11, and the second liquid runner 4.

When the energy storage system is in a stable running state, both the battery pack 1 and the power conversion component 2 generate heat. In this case, the liquid dispenser 7 may be enabled to be in the first working state to separately control the temperatures of the battery pack 1 and the power conversion component 2. Because the heat generated by the battery pack 1 is greater than the heat generated by the power conversion component 2, the first drive apparatus 5 and the second drive apparatus 6 may be at different power according to requirements, to control the liquid cooling working substance in the first liquid runner 3 to have different flow rates. In addition, the first heat exchanger 9 and the second heat exchanger 11 may further have different heat exchange efficiency.

This helps save energy. In addition, the first drive apparatus 5 drives the liquid working substance to flow in the first liquid runner 3 to dissipate heat only for the battery pack 1, thereby helping improve heat dissipation effect on the battery pack 1. When the energy storage system is started in a cold environment, the temperature of the battery pack 1 is low, and the temperature of the battery pack 1 needs to be increased to improve working efficiency of the battery pack. In this case, the liquid dispenser 7 may be enabled to be in the second working state. As shown in FIG. 2b, the liquid working substance flows between the first liquid runner 3 and the second liquid runner 4. In this state, the first heat exchanger 9 and the second heat exchanger 11 may be closed, that is, not lower the temperature of the liquid working substance. Heat generated by the power conversion component 2 may be transferred to the liquid working substance, and the liquid working substance then heats the battery pack. Therefore, the first liquid runner 3 does not need to be connected to a heater. This helps reduce power consumption, reduce space occupied by the temperature control system, and reduce costs. In addition, when the energy storage system stops working after working for a period of time, the battery pack 1 needs to be cooled, to prolong a service life of the battery pack 1. In this scenario, the liquid dispenser 7 may also be enabled to be in the second working state. In this state, the liquid working substance flows between the first liquid runner 3 and the second liquid runner 4. In this case, the first heat exchanger 9 and the second heat exchanger 11 are still in an open state, the two heat exchangers both lower the temperature of the liquid working substance. In this way, heat exchange efficiency is high, thereby quickly lowering the temperature of the battery pack 1. It should be noted that the power conversion component 2 stores little heat, and when the power conversion component 2 stops working, the temperature may be quickly lowered. Therefore, the two heat exchangers mainly dissipate heat for the battery pack 1.

Still with reference to FIG. 2a and FIG. 2b, in a further embodiment, a heater 12 may be further disposed on the first liquid runner 3. The heater 12 may heat the liquid working substance when the energy storage system is started in a cold environment, to adjust the temperature of the battery pack 1. In this case, the liquid dispenser 7 may be enabled to be in the second working state, and the heater 12 and the power conversion component 2 both heat the liquid working substance. In this way, the temperature of the battery pack 1 is quickly increased to an appropriate temperature, and the energy storage system quickly enters a good working state, thereby further reducing power consumption.

Still with reference to FIG. 2a and FIG. 2b, in a specific embodiment, the liquid dispenser 7 includes a first pipe joint 71, a second pipe joint 72, a third pipe joint 73, and a fourth pipe joint 74. The first pipe joint 71 and the second pipe joint 72 are provided on the first liquid runner 3. It may be considered that the first pipe joint 71 and the second pipe joint 72 are connected to two ends of the first liquid runner 3. When the first pipe joint 71 communicates with the second pipe joint 72, the liquid working substance flows between the first pipe joint 71 and the second pipe joint 72, so that the first liquid runner 3 forms a loop. The third pipe joint 73 and the fourth pipe joint 74 are provided on the second liquid runner 4. It may be considered that the third pipe joint 73 and the fourth pipe joint 74 are connected to two ends of the second liquid runner 4. When the third pipe joint 73 communicates with the fourth pipe joint 74, the liquid working substance flows between the third pipe joint 73 and the fourth pipe joint 74, so that the second liquid runner 4 forms a loop. As shown in FIG. 2a, when the liquid dispenser 7 is in the first working state, the first pipe joint 71 communicates with the second pipe joint 72, and in this case, the first liquid runner 3 forms the independent loop; and the third pipe joint 73 communicates with the fourth pipe joint 74, and in this case, the second liquid runner 4 forms the independent loop, so that the first liquid runner 3 and the second liquid runner 4 are independent of each other. As shown in FIG. 2b, when the liquid dispenser 7 is in the second working state, the first pipe joint 71 communicates with the third pipe joint 73, and the second pipe joint 72 communicates with the fourth pipe joint 74. In this case, the first liquid runner 3 and the second liquid runner 4 are connected in series to form the whole loop.

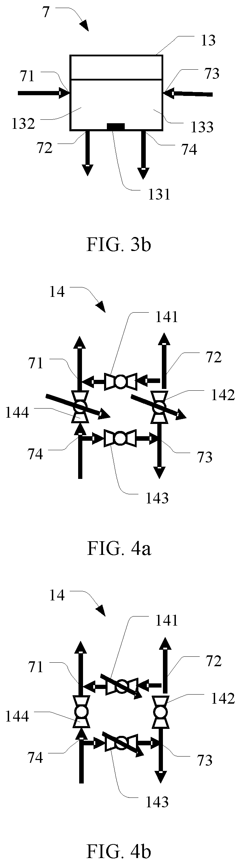

A specific structure of the liquid dispenser 7 is not limited in this application. FIG. 3a is a diagram of a structure of a liquid dispenser in a working state according to an embodiment of this application. FIG. 3b is a diagram of a liquid dispenser in another working state according to an embodiment of this application. As shown in FIG. 3a and FIG. 3b, in an optional embodiment, the liquid dispenser 7 is a liquid storage tank 13. In other words, the liquid dispenser 7 and the liquid storage tank 13 are of an integrated structure. The first pipe joint 71, the second pipe joint 72, the third pipe joint 73, and the fourth pipe joint 74 communicate with a cavity of the liquid storage tank 13. In a specific embodiment, the liquid storage tank 13 may include a separator 131. The separator 131 is movably installed in the cavity of the liquid storage tank 13. The separator 131 can move. As shown in FIG. 3a, when the separator 131 is in a state, the liquid storage tank 13 may be divided into two liquid storage cavities. The two liquid storage cavities may include a first liquid storage cavity 132 and a second liquid storage cavity 133. As shown in FIG. 3b, when the separator 131 is in another state, the interior of the liquid storage tank 13 may be a communicated cavity. This may also be understood that the first liquid storage cavity 132 and the second liquid storage cavity 133 communicate with each other. The liquid storage tank 13 in this embodiment may be understood as an integrated structure of the first liquid storage tank 8 and the second liquid storage tank 10.

In a working process, when the liquid dispenser 7 is in the first working state, the separator 131 divides the liquid storage tank 13 into the first liquid storage cavity 132 and the second liquid storage cavity 133, and the first liquid storage cavity 132 and the second liquid storage cavity 133 are independent of each other. The first pipe joint 71 and the second pipe joint 72 communicate with the first liquid storage cavity 132, so that the first liquid storage cavity 132 communicates with the first liquid runner 3. The temperature of the battery pack 1 is controlled by using the liquid coolant in the first liquid storage cavity 132. The third pipe joint 73 and the fourth pipe joint 74 communicate with the second liquid storage cavity 133, so that the second liquid storage cavity 133 communicates with the second liquid runner 4. Heat of the power conversion component 2 is dissipated by using the liquid working substance in the second liquid storage cavity 133. When the liquid dispenser 7 is in the second working state, the separator 131 combines the first liquid storage cavity 132 and the second liquid storage cavity 133 into a communicated cavity. To be specific, the first pipe joint 71, the second pipe joint 72, the third pipe joint 73, and the fourth pipe joint 74 communicate with each other, so that the first liquid runner 3 and the second liquid runner 4 communicate with each other. In this embodiment, the liquid storage tank 13 and the liquid dispenser 7 are of an integrated structure. This helps simplify a structure of the temperature control system.

Still with reference to FIG. 2a and FIG. 2b, in another embodiment, the liquid dispenser 7 may be a four-way valve, and four valve holes of the four-way valve are the first pipe joint 71, the second pipe joint 72, the third pipe joint 73, and the fourth pipe joint 74, respectively. The four-way valve in this embodiment is small in size. This also helps reduce a size of the liquid dispenser 7. In addition, in comparison with the foregoing embodiment in which the liquid storage tank 13 is used as the liquid dispenser 7, when the first liquid runner 3 and the second liquid runner 4 are independent of each other, a degree of isolation between the liquid working substance in the first liquid runner 3 and the liquid cooling working substance in the second liquid runner 4 is high, and heat of the liquid working substance in the first liquid runner 3 and that of the liquid cooling working substance in the second liquid runner 4 are isolated from each other. This helps improve a degree of heat isolation between the first liquid runner 3 and the second liquid runner 4 and improve heat dissipation effect.

FIG. 4a is a diagram of a structure of a liquid dispenser in a working state according to an embodiment of this application. FIG. 4b is a diagram of a structure of a liquid dispenser in another working state according to an embodiment of this application. As shown in FIG. 4a and FIG. 4b, in still another embodiment, the liquid dispenser 7 may be a first valve group 14. The first valve group 14 includes a first single valve 141, a second single valve 142, a third single valve 143, and a fourth single valve 144. The first single valve 141 is connected between the first pipe joint 71 and the second pipe joint 72. The second single valve 142 is connected between the second pipe joint 72 and the third pipe joint 73. The third single valve 143 is connected between the third pipe joint 73 and the fourth pipe joint 74. The fourth single valve 144 is connected between the fourth pipe joint 74 and the first pipe joint 71. In this solution, a working state of each single valve may be separately controlled. When the liquid dispenser 7 is in the first working state, the first single valve 141 and the third single valve 143 are opened, and the second single valve 142 and the fourth single valve 144 are closed, so that the first liquid runner 3 and the second liquid runner 4 are independent of each other and work separately. When the liquid dispenser 7 is in the second working state, the second single valve 142 and the fourth single valve 144 are opened, and the first single valve 141 and the third single valve 143 are closed, so that the first liquid runner 3 and the second liquid runner 4 communicate with each other.

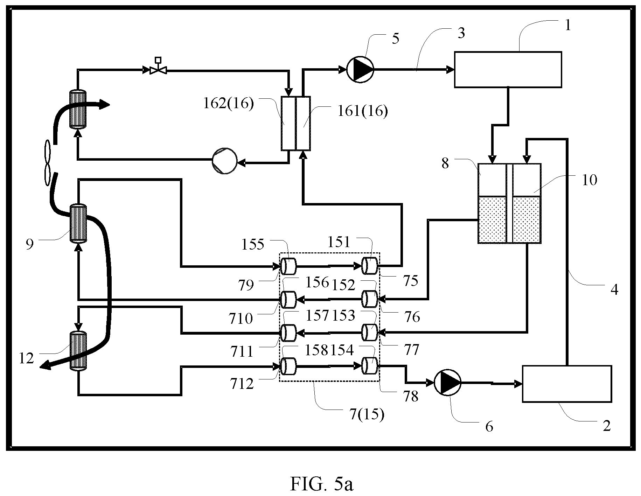

FIG. 5a to FIG. 5d each are a diagram of another structure of an energy storage system in a different state according to an embodiment of this application. With reference to FIG. 5a to FIG. 5d, the liquid dispenser 7 may further include more pipe joints. In this way, more communication solutions can be used for the temperature control system, so that the temperature control system has more working modes. For example, in a specific embodiment, the liquid dispenser 7 may include eight pipe joints. The eight pipe joints are a fifth pipe joint 75, a sixth pipe joint 76, a seventh pipe joint 77, an eighth pipe joint 78, a ninth pipe joint 79, a tenth pipe joint 710, an eleventh pipe joint 711, and a twelfth pipe joint 712, respectively. The fifth pipe joint 75 is provided on the first liquid runner 3, the seventh pipe joint 77 and the eighth pipe joint 78 are provided on the second liquid runner 4, the first heat exchanger 9 is connected between the ninth pipe joint 79 and the tenth pipe joint 710, and the second heat exchanger 11 is connected between the eleventh pipe joint 711 and the twelfth pipe joint 712.

As shown in FIG. 5a, when the liquid dispenser 7 is in the first working state, the fifth pipe joint 75 communicates with the ninth pipe joint 79, and the sixth pipe joint 76 communicates with the tenth pipe joint 710, so that the first heat exchanger 9 communicates with the first liquid runner 3. The liquid cooling working substance in the first liquid runner 3 is cooled by using the first heat exchanger 9. The seventh pipe joint 77 communicates with the eleventh pipe joint 711, and the eighth pipe joint 78 communicates with the twelfth pipe joint 712. In this solution, the first heat exchanger 9 communicates with the first liquid runner 3, the second heat exchanger 11 communicates with the second liquid runner 4, and the first liquid runner 3 and the second liquid runner 4 are independent of each other.

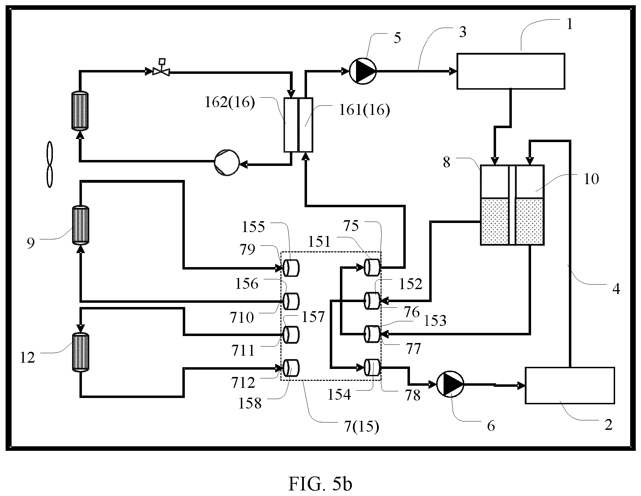

As shown in FIG. 5b, when the liquid dispenser 7 is in the second working state, the fifth pipe joint 75 communicates with the seventh pipe joint 77, the sixth pipe joint 76 communicates with the eighth pipe joint 78, and the ninth pipe joint 79, the tenth pipe joint 710, the eleventh pipe joint 711, and the twelfth pipe joint 712 are closed. In this solution, the first heat exchanger 9 and the second heat exchanger 11 may be closed, so that the first liquid runner 3 and the second liquid runner 4 are connected in series to form one whole loop.

Still with reference to FIG. 5a to FIG. 5d, in another embodiment, the energy storage system may further include a condenser 16. The condenser 16 communicates with the first liquid runner 3, and is configured to lower the temperature of the liquid working substance in the first liquid runner 3. Specifically, the condenser 16 includes a first runner 161 and a second runner 162. The first runner 161 communicates with the first liquid runner 3, so that the liquid working substance in the first liquid runner 3 flows through the first runner 161. An external coolant flows through the second runner 162. The external coolant is configured to dissipate heat for the liquid working substance. In this solution, a heat dissipation capability of the first liquid runner 3 can be improved, and the heat dissipation effect on the battery pack 1 can be improved.

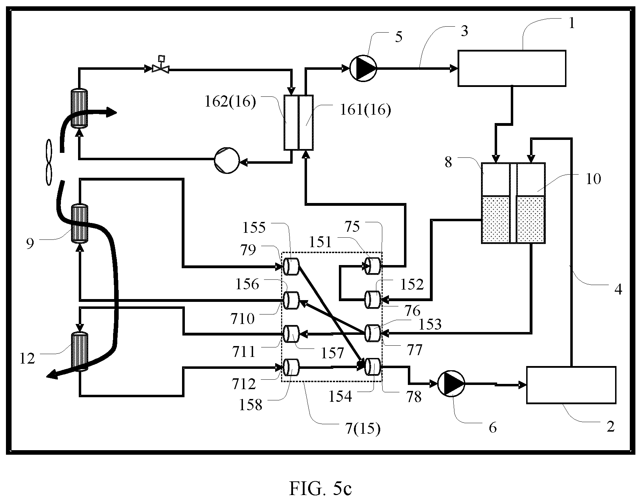

In addition, the liquid dispenser 7 may further include a third working state. As shown in FIG. 5c, when the liquid dispenser 7 is in the third working state, the fifth pipe joint 75 communicates with the sixth pipe joint 76, the seventh pipe joint 77 communicates with the tenth pipe joint 710 and the eleventh pipe joint 711, and the eighth pipe joint 78 communicates with the ninth pipe joint 79 and the twelfth pipe joint 712. In this state, the condenser 16 may be started. The temperature of the liquid working substance in the first liquid runner 3 is lowered by using the condenser 16, to dissipate heat for the battery pack 1. A heat dissipation capability is high. The temperature of the liquid cooling working substance in the second liquid runner 4 is lowered by jointly using the first heat exchanger 9 and the second heat exchanger 11, to dissipate heat for the power conversion component 2. This is applicable in the following case: When the energy storage system works in a high-temperature environment, heat exchange capabilities of the first heat exchanger 9 and the second heat exchanger 11 are excessively low, and have difficulty in meeting a heat dissipation requirement of the battery pack 1. In this case, the temperature of the battery pack 1 is lowered by using the condenser 16, to ensure normal operation of the battery pack.

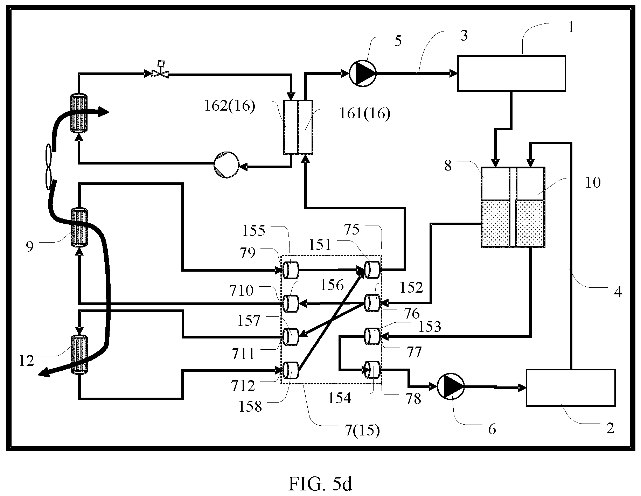

The liquid dispenser 7 may further include a fourth working state. As shown in FIG. 5d, when the liquid dispenser 7 is in the fourth working state, the fifth pipe joint 75 communicates with the ninth pipe joint 79 and the twelfth pipe joint 712, the sixth runner 76 sequentially communicates with the tenth pipe joint 710 and the eleventh pipe joint 711, and the seventh pipe joint 77 communicates with the eighth pipe joint 78. In this state, both the first heat exchanger 9 and the second heat exchanger 11 communicate with the first liquid runner 3, and are configured to cool the liquid cooling working substance in the first liquid runner 3. In this way, the heat exchange efficiency is high, thereby improving cooling effect of the first liquid runner 3, so that the temperature of the battery pack 1 can be quickly lowered. This is applicable to a case in which the battery pack 1 needs to be cooled when the energy storage system stops working after working for a period of time. After stopping working, the power conversion component 2 may cool itself. Therefore, there is no need to use a heat exchanger to dissipate heat for the power conversion component 2.

In a specific embodiment, the liquid dispenser 7 may be a second valve group 15. The second valve group 15 includes a fifth single valve 151, a sixth single valve 152, a seventh single valve 153, an eighth single valve 154, a ninth single valve 155, a tenth single valve 156, an eleventh single valve 157, and a twelfth single valve 158. The fifth single valve 151 communicates with the fifth pipe joint 75. The sixth single valve 152 communicates with the sixth pipe joint 76. The seventh single valve 153 communicates with the seventh pipe joint 77. The eighth single valve 154 communicates with the eighth pipe joint 78. The ninth single valve 155 communicates with the ninth pipe joint 79. The tenth single valve 156 communicates with the tenth pipe joint 710. The eleventh single valve 157 communicates with the eleventh pipe joint 711. The twelfth single valve 158 communicates with the twelfth pipe joint 712. The foregoing single valves may communicate and not communicate to implement the foregoing various working states.

In addition, in a specific embodiment, a specific type of the first heat exchanger 9 and a specific type of the second heat exchanger 11 are not limited. For example, the first heat exchanger 9 may be a heat sink that dissipates heat for the liquid working substance by using fresh air, or the first heat exchanger 9 may be a condenser that dissipates heat for the liquid working substance by using the external coolant. Alternatively, the second heat exchanger 11 may be a heat sink that dissipates heat for the liquid working substance by using fresh air, or the second heat exchanger 11 may be a condenser that dissipates heat for the liquid working substance by using the external coolant. Based on a same inventive concept, this application further provides a power supply system. The power supply system includes the energy storage system in any one of the foregoing embodiments, and further includes a power distribution device. The power distribution device is electrically connected to the energy storage system. The power distribution device is further electrically connected to a user, and is configured to process electricity in the energy storage system and then distribute the processed electricity to the user for use. **In** this embodiment, the energy storage system in the power supply system may adjust a temperature control solution based on a working state, to reduce space occupied by the energy storage system, reduce power consumption, and save energy.

**In** a specific embodiment, a specific form of the power supply system is not limited. For example, the power supply system may be a large power station, or a micro power station. The micro power station may be specifically located in an industrial park or a residential district. Alternatively, the power supply system may be a home power supply system or a power supply system of a device such as a vehicle.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An energy storage system, comprising a battery pack, a power conversion component, a first liquid runner, a second liquid runner, a first drive apparatus, a second drive apparatus, and a liquid dispenser, wherein
the first liquid runner is in contact with the battery pack in a thermally conductive manner, and the first drive apparatus communicates with the first liquid runner and is configured to drive a liquid working substance to flow in the first liquid runner;
the second liquid runner is in contact with the power conversion component in a thermally conductive manner, and the second drive apparatus communicates with the second liquid runner and is configured to drive the liquid working substance to flow in the second liquid runner; and
the liquid dispenser separately communicates with the first liquid runner and the second liquid runner, and the liquid dispenser has a first working state and a second working state, wherein when the liquid dispenser is in the first working state, the first liquid runner is isolated from the second liquid runner; and when the liquid dispenser is in the second working state, the first liquid runner communicates with the second liquid runner.

2. The energy storage system according to claim 1, wherein the liquid dispenser comprises a first pipe joint, a second pipe joint, a third pipe j oint, and a fourth pipe joint, the first pipe joint and the second pipe joint are provided on the first liquid runner, and the third pipe joint and the fourth pipe joint are provided on the second liquid runner; and
when the liquid dispenser is in the first working state, the first pipe joint communicates with the second pipe joint, and the third pipe joint communicates with the fourth pipe joint; and when the liquid dispenser is in the second working state, the first pipe j oint communicates with the third pipe joint, and the second pipe joint communicates with the fourth pipe joint.

3. The energy storage system according to claim 2, wherein the liquid dispenser is a four-way valve, and four valve holes of the four-way valve are the first pipe joint, the second pipe j oint, the third pipe joint, and the fourth pipe joint, respectively.

4. The energy storage system according to claim 2, wherein the liquid dispenser is a first valve group, the first valve group comprises a first single valve, a second single valve, a third single valve, and a fourth single valve, the first single valve is connected between the first pipe joint and the second pipe joint, the second single valve is connected between the second pipe joint and the third pipe joint, the third single valve is connected between the third pipe joint and the fourth pipe joint, and the fourth single valve is connected between the fourth pipe joint and the first pipe joint.

5. The energy storage system according to claim 2, wherein the liquid dispenser is a liquid storage tank, and the first pipe joint, the second pipe joint, the third pipe joint, and the fourth pipe joint communicate with a cavity of the liquid storage tank; and
the liquid storage tank comprises a separator, and when the liquid dispenser is in the first working state, the separator divides the liquid storage tank into a first liquid storage cavity and a second liquid storage cavity, the first pipe joint and the second pipe joint communicate with the first liquid storage cavity, and the third pipe joint and the fourth pipe joint communicate with the second liquid storage cavity; and when the liquid dispenser is in the second working state, the separator combines the first liquid storage cavity and the second liquid storage cavity into a communicated cavity.

6. The energy storage system according to claim 1, wherein the first drive apparatus further comprises a first heat exchanger, the second drive apparatus further comprises a second heat exchanger, the liquid dispenser comprises a fifth pipe joint, a sixth pipe joint, a seventh pipe joint, an eighth pipe j oint, a ninth pipe joint, a tenth pipe joint, an eleventh pipe joint, and a twelfth pipe joint, the fifth pipe joint and the sixth pipe joint are provided on the first liquid runner, the seventh pipe joint and the eighth pipe joint are provided on the second liquid runner, the first heat exchanger is connected between the ninth pipe joint and the tenth pipe joint, and the second heat exchanger is connected between the eleventh pipe joint and the twelfth pipe joint; and
when the liquid dispenser is in the first working state, the fifth pipe joint communicates with the ninth pipe joint, the sixth pipe joint communicates with the tenth pipe joint, the seventh pipe joint communicates with the eleventh pipe joint, and the eighth pipe joint communicates with the twelfth pipe joint; and when the liquid dispenser is in the second working state, the fifth pipe joint communicates with the seventh pipe joint, the sixth pipe joint communicates with the eighth pipe joint, and the ninth pipe joint, the tenth pipe joint, the eleventh pipe joint, and the twelfth pipe joint are closed.

7. The energy storage system according to claim 6, wherein the liquid dispenser further comprises a third working state, and when the liquid dispenser is in the third working state, the fifth pipe joint communicates with the sixth pipe joint, the seventh pipe joint sequentially communicates with the tenth pipe joint and the eleventh pipe joint, and the eighth pipe joint communicates with the ninth pipe joint and the twelfth pipe joint.

8. The energy storage system according to claim 6 or 7, wherein the liquid dispenser further comprises a fourth working state, and when the liquid dispenser is in the fourth working state, the fifth pipe joint communicates with the ninth pipe joint and the twelfth pipe joint, the sixth pipe joint communicates with the tenth pipe joint and the eleventh pipe joint, and the seventh pipe joint communicates with the eighth pipe joint.

9. The energy storage system according to any one of claims 6 to 8, wherein the liquid dispenser comprises a fifth single valve, a sixth single valve, a seventh single valve, an eighth single valve, a ninth single valve, a tenth single valve, an eleventh single valve, and a twelfth single valve, the fifth single valve communicates with the fifth pipe joint, the sixth single valve communicates with the sixth pipe joint, the seventh single valve communicates with the seventh pipe joint, the eighth single valve communicates with the eighth pipe joint, the ninth single valve communicates with the ninth pipe joint, the tenth single valve communicates with the tenth pipe joint, the eleventh single valve communicates with the eleventh pipe joint, and the twelfth single valve communicates with the twelfth pipe joint.

10. The energy storage system according to any one of claims 1 to 9, further comprising a heater, wherein the heater communicates with the first cooling runner, and is configured to heat the liquid working substance in the first cooling runner.

11. The energy storage system according to any one of claims 1 to 10, further comprising a condenser, wherein the condenser communicates with the first cooling runner, and is configured to lower a temperature of the liquid working substance in the first cooling runner.

12. A power supply system, comprising a power distribution device and at least one energy storage system according to any one of claims 1 to 11, wherein the power distribution device is electrically connected to the energy storage system.
